# EUROPÄISCHE PATENTANMELDUNG

(11) **EP 4 813 814 A1**
(43) Veröffentlichungstag der Anmeldung: **30.09.2026**
(21) Anmeldenummer: 25166297.9
(22) Anmeldetag: 26.03.2025
(51) Int. Cl.: B62D 25/12, B62D 25/10

(54) **MOTORHAUBEN-ANORDNUNG FÜR EIN KRAFTFAHRZEUG**

(71) Anmelder: Ford Global Technologies, LLC, Dearborn, MI 48126 (US)
(72) Erfinder: DUFFE, Tobias, 50674 Köln (DE); PRITZ, Fabian, 51375 Leverkusen (DE); YILDIRIM, Naim, 41001 Izmit, Kocaeli (TR); KALAYCIOGLU, Adil Oguz, 41190 Basiskele, Kocaeli (TR); ISBILEN, Erdem, CM11 1BG Billericay, Essex (GB); ELTUT, Burc, 41140 Basiskele, Kocaeli (TR)
(74) Vertreter: Markowitz, Markus

(57) **Zusammenfassung**

Die Erfindung betrifft eine Motorhauben-Anordnung (10) für ein Kraftfahrzeug (1), mit einer Motorhaube (11), welche in einer Schließposition (A) eine Motorraum-Zugangsöffnung (4) verschließt, sowie mit einer Scharnieranordnung (17), die ein fahrzeugkörperseitiges Basiselement (20) und ein motorhaubenseitiges Schwenkelement (30) aufweist, welche in der Schließposition (A) einen beidseitigen Formschluss bezüglich einer Hochachse (Z) herstellen, wobei die Motorhaube (11) durch eine Schwenkbewegung um Schwenkachse (S) aus der Schließposition (A) in eine Öffnungsposition (B) schwenkbar ist und aus der Öffnungsposition (B) durch eine wenigstens anteilig translatorische Entkopplungsbewegung zusammen mit dem Schwenkelement (30) vom Fahrzeugkörper (2) lösbar ist. Es ist erfindungsgemäß vorgesehen, dass die Motorhauben-Anordnung (10) eine von der Schwenkachse (S) beabstandete Positionierungsanordnung (15) aufweist, mit einem motorhaubenseitigen Positionierungselement (16) und einem fahrzeugkörperseitigen Gegenelement (6), welche in der Schließposition (A) einen Formschluss bilden, wodurch die Positionierungsanordnung (15) eine Position der Motorhaube (11) bezüglich einer horizontalen Achse (X, Y) festlegt.

## Beschreibung

Die Erfindung betrifft eine Motorhauben-Anordnung für ein Kraftfahrzeug, mit den Merkmalen des Oberbegriffs des Anspruchs 1.

Bei Kraftfahrzeugen wie Pkw oder leichten Lkw ist der Motorraum typischerweise mit einer Haube verschließbar, die eine oberseitige Öffnung abdecken kann und geschwenkt wird, um Zugriff auf den Motorraum zu erhalten. Dies kann zu Wartungszwecken erfolgen, z.B. zum Nachfüllen der Scheibenwaschanlage, zum Nachfüllen oder Überprüfen von Kühlflüssigkeit oder Bremsflüssigkeit oder zur Reparatur des Antriebsstrangs oder anderer Komponenten. Bezüglich der Fahrzeugquerachse können im Bereich der A-Säule beiderseits Scharniere vorgesehen sein, während ein Verriegelungsmechanismus die Haube vor unbeabsichtigtem oder unerlaubtem Öffnen schützt. Bei Elektrofahrzeugen ist es jetzt und in Zukunft weniger notwendig, dem Fahrer einen Zugriff auf den Raum unter der Motorhaube zu ermöglichen. Daher können dauerhaftere Befestigungssysteme eingesetzt werden, die allerdings ein Öffnen der Motorhaube zu Servicezwecken ermöglichen müssen. Derartige Befestigungssystem können einfacher und weniger kostenintensiv ausgestaltet sein.

Die US 10 315 705 B2 offenbart ein System zur Montage einer Kraftfahrzeug-Haube an einer Fahrzeugkarosserie, umfassend ein Führungselement, um die Haube relativ zur Karosserie in einer Längsrichtung des Fahrzeugs gleitend zu führen, ein Verriegelungselement zum Verriegeln der Motorhaube, um die Motorhaube relativ zu der Karosserie in einer geschlossenen Position zu fixieren, wobei das Verriegelungselement einen aktivierten Zustand als Ergebnis einer Gleitbewegung der Motorhaube relativ zu der Karosserie in der Längsrichtung des Fahrzeugs in einer ersten Richtung annimmt, und eine Verriegelung, die in einer Verriegelungskonfiguration die Gleitbewegung der Haube in der zweiten Richtung in der Längsrichtung verhindert, wobei das Führungselement ein selbstzentrierendes Element aufweist, um die Haube relativ zu der Karosserie in einer Richtung quer zu dem Fahrzeug selbst zu zentrieren.

Die DE 10 2023 115 128 A1 offenbart eine Motorhauben-Anordnung für ein Kraftfahrzeug, mit einer Motorhaube, welche in einer Schließposition eine Motorraum-Zugangsöffnung eines Fahrzeugkörpers verschließt, sowie mit wenigstens einer Scharnieranordnung, die ein fahrzeugkörperseitiges Basiselement und ein motorhaubenseitiges Schwenkelement aufweist, welche in der Schließposition einen beidseitigen Formschluss bezüglich einer Längsachse sowie einer Hochachse herstellen. Die Motorhaube ist durch eine Schwenkbewegung um eine parallel zu einer Querachse verlaufende Schwenkachse aus der Schließposition in eine Öffnungsposition schwenkbar, in welcher der Formschluss wenigstens teilweise aufgelöst ist, so dass die Motorhaube aus der Öffnungsposition durch eine Entkopplungsbewegung, die wenigstens anteilig translatorisch erfolgt, zusammen mit dem Schwenkelement vom Fahrzeugkörper lösbar ist.

Aus der EP 2 814 698 B1 ist ein System zur Montage einer Motorhaube an einer Kraftfahrzeugkarosserie bekannt, das einerseits mindestens einen Haubenträger umfasst, der an der Karosserie befestigt ist und Positionierelemente umfasst, die aktiviert werden können, um mit der Motorhaube zusammenzuwirken, so dass die Motorhaube in einer geschlossenen Position gehalten wird. Die Positionierelemente sind so konfiguriert, dass sie durch ein Gleiten der Motorhaube in Bezug auf den Haubenträger in einer ersten bzw. einer zweiten entgegengesetzten Richtung, insbesondere in einer im Wesentlichen horizontalen Richtung, aktiviert und deaktiviert werden können. Weiterhin umfasst das System einen Verriegelungsmechanismus, der zwischen einer Verriegelungskonfiguration, die eine Deaktivierung der Positionierelemente unterbindet, und einer Entriegelungskonfiguration, die eine Aktivierung der Positionierelemente zulässt, verstellbar ist. Dabei wird das Gleiten der Motorhaube in die erste Richtung durch den Wechsel des Verriegelungsmechanismus von der Entriegelungskonfiguration in die Verriegelungskonfiguration gesteuert.

Angesichts des aufgezeigten Standes der Technik bietet eine sichere Anbindung einer Motorhaube, die einen einfachen Zugang zum Motorraum ermöglicht, noch Raum für Verbesserungen.

Der Erfindung liegt die Aufgabe zugrunde, eine sichere Anbindung einer Motorhaube sowie einen einfachen Zugang zum Motorraum zu ermöglichen.

Erfindungsgemäß wird die Aufgabe durch eine Motorhauben-Anordnung mit den Merkmalen des Anspruchs 1 gelöst, wobei die Unteransprüche vorteilhafte Ausgestaltungen der Erfindung betreffen.

Es ist darauf hinzuweisen, dass die in der nachfolgenden Beschreibung einzeln aufgeführten Merkmale sowie Maßnahmen in beliebiger, technisch sinnvoller Weise miteinander kombiniert werden können und weitere Ausgestaltungen der Erfindung aufzeigen. Die Beschreibung charakterisiert und spezifiziert die Erfindung insbesondere im Zusammenhang mit den Figuren zusätzlich. Die in dieser Anmeldung verwendeten Begriffe "erster", "zweiter", usw. dienen nur zum Zwecke der Unterscheidung. Insbesondere soll durch ihre Verwendung keine Reihenfolge oder Priorität der im Zusammenhang mit diesen Begriffen genannten Objekte impliziert werden.

Mit dem Eintritt elektrifizierter Fahrzeuge in den Kraftfahrzeugmarkt werden viele bestehende Komponenten im Motorraum unnötig werden. Der überschüssige Raum, der durch die Entfernung dieser Komponenten verfügbar wird, ermöglicht ein vorderes Aufbewahrungsfach, das auch als Frontkofferraum bekannt ist und manchmal zu "Frunk" abgekürzt wird. Frontkofferräume sind Ladebereiche, die sich an der Vorderseite eines Fahrzeugs befinden und typischerweise durch Öffnen der Motorhaube des Fahrzeugs zugänglich sind. Analog sind heckseitige Ladebereiche von Fahrzeugen mit Heckmotoren zu betrachten. Gleichwohl wird der Begriff "Motorraum" und der Begriff "Motorhaube" im Folgenden verwendet, was auch die Bedeutung als Frontraum oder Heckraum sowie Fronthaube oder Heckhaube oder Heckklappe mit einschließen soll,

Durch die Erfindung wird eine Motorhauben-Anordnung für ein Kraftfahrzeug zur Verfügung gestellt. Bei dem Kraftfahrzeug kann es sich insbesondere um einen Pkw, aber auch um einen Lkw handeln. Insbesondere kann es sich um ein Elektrofahrzeug handeln, allerdings ist auch eine Anwendung bei Fahrzeugen mit Verbrennungsmotor möglich.

Die Motorhauben-Anordnung weist eine Motorhaube auf, welche in einer Schließposition eine Motorraum-Zugangsöffnung eines Fahrzeugkörpers verschließt. Der Fahrzeugkörper kann der gefederten Masse des Kraftfahrzeugs entsprechen, also z.B. dem Chassis sowie der Karosserie. Die Motorraum-Zugangsöffnung ist eine Öffnung, über die bei einem final montierten Kraftfahrzeug ein Zugang oder Zugriff zum Motorraum möglich ist. Sie ist normalerweise in einer Verkleidung des Fahrzeugkörpers ausgebildet. Der Motorraum kann bezüglich der Fahrtrichtung des Kraftfahrzeugs frontseitig oder auch heckseitig angeordnet sein. Die Zugangsöffnung schließt sich normalerweise oberseitig an den Motorraum an, sie kann aber z.B. bei einem frontseitigen Motorraum auch nach vorne oder schräg nach vorne weisen bzw. bei einem heckseitigen Motorraum nach hinten oder schräg nach hinten. Die Motorhaube verschließt die Motorraum-Zugangsöffnung, wenn sie in einer Schließposition angeordnet ist. Der Begriff "Verschließen" ist nicht im Sinne eines fluiddichten Verschlusses zu verstehen, sondern bezeichnet, dass für einen Benutzer ein Zugang zum Motorraum, also ein Eingreifen in den Motorraum, über die Motorraum-Zugangsöffnung nicht möglich ist. Die Motorhaube kann aus Metall bestehen, z.B. aus Stahl oder Aluminium, insbesondere kann sie aber auch aus Kunststoff oder faserverstärktem Kunststoff gefertigt sein

Weiterhin weist die Motorhauben-Anordnung wenigstens eine Scharnieranordnung auf, die ein fahrzeugkörperseitiges Basiselement und ein motorhaubenseitiges Schwenkelement aufweist, welche in der Schließposition einen beidseitigen Formschluss bezüglich einer Hochachse herstellen. Der Begriff "Scharnieranordnung" ist nicht einschränkend auszulegen, wenngleich die Funktion der Scharnieranordnung zumindest teilweise mit einem Scharnier zu vergleichen ist. Die Scharnieranordnung kann auch als Verbindungsanordnung oder Kopplungsanordnung bezeichnet werden. Sie weist zum einen ein fahrzeugkörperseitiges Basiselement auf. Dieses ist bevorzugt stationär am Fahrzeugkörper angeordnet oder kann als Teil desselben angesehen werden. Des Weiteren weist sie ein motorhaubenseitiges Schwenkelement auf. Dieses ist an der Motorhaube angeordnet. Bevorzugt ist es starr mit der Motorhaube verbunden, was auch die Möglichkeit einschließt, dass es ganz oder teilweise einstückig mit der Motorhaube ausgebildet ist. Wie nachfolgend noch deutlich wird, können das Basiselement und das Schwenkelement zumindest teilweise mit den zwei gegeneinander beweglichen Teilen eines Scharniers verglichen werden. In der Schließposition der Motorhaube wirken das Basiselement und das Schwenkelement derart miteinander zusammen, dass sie einen Formschluss bezüglich einer Hochachse herstellen. Der Formschluss ist beidseitig gegeben, also sowohl in Richtung der Hochachse als auch in Gegenrichtung. Durch den Formschluss wird eine translatorische Bewegung der Motorhaube gegenüber dem Fahrzeugkörper entlang der Hochachse entweder verhindert oder zumindest auf ein vernachlässigbares Maß beschränkt. Der Formschluss kann die Motorhaube insbesondere bezüglich der Hochachse arretieren, zumindest im Bereich der Scharnieranordnung. Optional kann in der Schließposition auch ein wenigstens einseitiger, u.U. auch beidseitiger Formschluss bezüglich einer Längsachse gegeben sein. Allgemein sind in diesem Zusammenhang die Begriffe "Längsachse", "Querachse" sowie "Hochachse" nicht einschränkend auszulegen, abgesehen davon, dass die genannten Achsen paarweise senkrecht zueinander ausgerichtet sind. Allgemein bilden sie ein bezüglich des Fahrzeugkörpers stationäres Bezugssystem. Insbesondere kann es sich allerdings um die Fahrzeuglängsachse, die Fahrzeugquerachse sowie die Fahrzeughochachse handeln. Es sind jedoch auch andere Definitionen denkbar, wobei bspw. die Längsachse der Fahrzeugquerachse entsprechen könnte oder aber schräg zur Fahrzeuglängsachse sowie zur Fahrzeughochachse ausgerichtet sein könnte.

Die Motorhaube ist durch eine Schwenkbewegung um eine parallel zu einer Querachse verlaufende Schwenkachse aus der Schließposition in eine Öffnungsposition schwenkbar und ist aus der Öffnungsposition durch eine wenigstens anteilig translatorische Entkopplungsbewegung zusammen mit dem Schwenkelement vom Fahrzeugkörper lösbar. Die Schwenkachse verläuft bevorzugt im Bereich der Scharnieranordnung, insbesondere durch die Scharnieranordnung. Wie nachfolgend noch erläutert wird, ist die Schwenkachse bevorzugt durch das Zusammenwirken des Schwenkelements und des Basiselements definiert. Man kann auch sagen, dass die Motorhaube durch die wenigstens eine Scharnieranordnung geführt aus der Schließposition in die Öffnungsposition schwenkbar ist. In der Öffnungsposition verschließt die Motorhaube die Motorraum-Zugangsöffnung zumindest nicht vollständig, so dass u.U. ein Zugang zum Motorraum möglich ist. Es sind allerdings auch Ausführungsformen denkbar, bei denen die Öffnungsposition keinen Zugriff auf den Motorraum erlaubt, da der Abstand zwischen der Motorhaube und den angrenzenden Verkleidungsteilen zu gering ist. Dabei kann die Schwenkbewegung bevorzugt einem Schwenkwinkel von wenigstens 10° oder wenigstens 20° entsprechen, so dass die Schließposition und die Öffnungsposition für einen Benutzer klar getrennt sind. In einigen Ausführungsformen kann durch die Schwenkbewegung in die Öffnungsposition der translatorische Formschluss zwischen dem Basiselement und dem Schwenkelement wenigstens teilweise aufgelöst werden. D.h. es kann eine wenigstens teilweise translatorische Entkopplung erfolgen. In jedem Fall ist die Motorhaube in der Öffnungsposition insoweit vom Fahrzeugkörper entkoppelt, dass sie ausgehend von der Öffnungsposition zusammen mit dem Schwenkelement vom Fahrzeugkörper und dem Basiselement entfernt werden kann. Dies geschieht durch eine Entkopplungsbewegung, die wenigstens teilweise translatorisch erfolgt. Die Entkopplungsbewegung muss nicht zwangsläufig geradlinig sein, wenngleich dies bevorzugt ist. Es kann sich auch um eine komplexe Bewegung mit einer Mehrzahl von translatorischen Einzelbewegungen handeln. Außerdem kann die Entkopplungsbewegung auch rotatorische Bewegungsanteile enthalten.

Zumindest nachdem die Motorhaube vom Fahrzeugkörper entfernt wurde, ist ein vollumfänglicher Zugang zur Motorraum-Zugangsöffnung möglich. Die Öffnungsposition kann dabei u.U. lediglich als Zwischenposition bei der Demontage der Motorhaube dienen. Es ist allerdings auch denkbar, dass bereits in der Öffnungsposition ein Zugriff auf den Motorraum möglich ist. In diesem Fall kann die Motorhaube bedarfsweise über die wenigstens eine Scharnieranordnung mit dem Fahrzeugkörper verbunden bleiben, wobei sie u.U. zusätzlich abgestützt werden kann, beispielsweise mit einer Motorhaubenstütze, die mit dem Fahrzeugkörper verbunden ist und - wie bei im Stand der Technik bekannten Motorhauben - wahlweise ein- oder ausgeklappt werden kann. Das Lösen der Motorhaube erfolgt durch die Schwenkbewegung sowie die nachfolgende Entkopplungsbewegung. Erstere ist bevorzugt eine Voraussetzung dafür, dass die Motorhaube gelöst werden kann. Dies erleichtert es dem Benutzer, den Bewegungsablauf durchzuführen, da dieser klar gegliedert ist.

Die Entkopplungsbewegung kann bevorzugt wenigstens teilweise im Winkel zur Längsachse (also nicht parallel zu dieser) erfolgen. Insbesondere kann sie anteilig entlang der Hochachse erfolgen, so dass die Motorhaube gewissermaßen vom Fahrzeugkörper abgehoben wird. Es kann eine Mehrzahl von Scharnieranordnungen vorgesehen sein. Insbesondere kann die Motorhauben-Anordnung zwei Scharnieranordnungen aufweisen, die entlang der Querachse beabstandet sind. Diese entsprechen gewissermaßen den Scharnieren bei einer im Stand der Technik bekannten Motorhaube.

Erfindungsgemäß weist die Motorhauben-Anordnung eine von der Schwenkachse beabstandete Positionierungsanordnung auf, mit wenigstens einem motorhaubenseitigen Positionierungselement und einem fahrzeugkörperseitigen Gegenelement, welche in der Schließposition einen Formschluss bilden, wodurch die Positionierungsanordnung eine Position der Motorhaube bezüglich wenigstens einer horizontalen Achse festlegt, die senkrecht zur Hochachse verläuft. Die Positionierungsanordnung ist von der Schwenkachse beabstandet und somit bevorzugt auch von der wenigstens einen Scharnieranordnung beabstandet. Sie kann insbesondere in einem Bereich der Motorhaube angeordnet sein, welcher der Schwenkachse bezüglich der Längsachse gegenüberliegt. Ist die Schwenkachse z.B. an einem hinteren Endbereich der Motorhaube angeordnet, kann die Positionierungsanordnung an einem vorderen Endbereich angeordnet sein. Dies bezieht sich streng genommen auf das wenigstens eine Positionierungselement, welches an der Motorhaube angeordnet ist. Bevorzugt ist es an der Motorhaube positionsfest angeordnet und kann optional auch einstückig mit dieser ausgebildet sein. Das wenigstens eine Gegenelement ist am Fahrzeugkörper angeordnet und ist bevorzugt positionsfest gegenüber dem wenigstens einen Basiselement angeordnet. Es kann in einem dem wenigstens einen Gegenelement bezüglich der Längsachse gegenüberliegenden Bereich der Zugangsöffnung angeordnet sein.

Das wenigstens eine Positionierungselement bildet in der Schließposition mit dem wenigstens einen Gegenelement einen Formschluss. Dabei kann insbesondere vorgesehen sein, dass jeweils ein Positionierungselement und ein Gegenelement einander zugeordnet sind und miteinander einen Formschluss bilden. Das Positionierungselement kann bspw. von der Motorhaube abragen, also gegenüber dieser vorspringen, während das Gegenelement eine Ausnehmung definiert, in welche das Positionierungselement in der Schließposition eingreift. Grundsätzlich ist allerdings auch eine umgekehrte Ausgestaltung denkbar, bei welcher das Positionierungselement eine Ausnehmung definiert. Bevorzugt kann wenigstens eines der Elemente eine abgeschrägte Führungsfläche aufweisen, welche dazu ausgebildet ist, mit dem jeweils anderen Element zusammenzuwirken, um beim Übergang in die Schließposition das wenigstens eine Positionierungselement und das wenigstens eine Gegenelement in eine vorgesehene Relativposition zu führen. In der vorgesehenen Relativposition ist dann der o.g. Formschluss gegeben. Bevorzugt sind wenigstens zwei Positionierungselemente und wenigstens zwei Gegenelemente vorgesehen. Die Positionierungselemente können in Richtung der Querachse voneinander beabstandet sein. Gleiches gilt für die Gegenelemente. Während der Formschluss in der Schließposition gegeben ist, ist er bevorzugt durch Verstellen der Motorhaube in die Öffnungsposition aufhebbar.

Insgesamt sorgt der Formschluss zwischen dem wenigstens einen Positionierungselement und dem wenigstens einen Gegenelement dafür, dass eine Position der Motorhaube bezüglich wenigstens einer horizontalen Achse festgelegt ist. Man kann auch sagen, dass die Motorhaube bezüglich dieser horizontalen Achse arretiert ist. Genauer gesagt ist die Position gegenüber dem wenigstens einen Gegenelement festgelegt und somit gegenüber dem Fahrzeugkörper insgesamt. Es versteht sich, dass hierbei eventuelle elastische Verformungen beim Betrieb des Kraftfahrzeugs außer Acht bleiben, durch welche sich die Position der Motorhaube oder eines Teils derselben zwischenzeitlich verändern kann. Die horizontale Achse ist dabei eine Achse, die senkrecht zur Hochachse verläuft, also innerhalb der Ebene, die durch die Längsachse und die Querachse aufgespannt ist. Soweit die Hochachse mit der Fahrzeughochachse übereinstimmt, verläuft die horizontale Achse im herkömmlichen Sinn horizontal, also senkrecht zur Wirkrichtung der Schwerkraft.

Die Positionierungsanordnung ergänzt in ihrer Wirkung die wenigstens eine Scharnieranordnung. Während letztere einen beidseitigen Formschluss bezüglich der Hochachse bewirkt, wird durch die Positionierungsanordnung eine Position senkrecht zur Hochachse definiert. Dies kann zum einen zu einer Entlastung der Scharnieranordnung führen, da sie senkrecht zur Hochachse wirkende Kräfte nicht oder nur in geringerem Maße übertragen muss. Vor allen Dingen kann es zu einer präziseren Positionierung der Motorhaube in horizontaler Richtung beitragen, auch wenn die wenigstens eine Scharnieranordnung aufgrund von Fertigungs- und/oder Montagetoleranzen eine derartige Positionierung nicht erlaubt. Die präzisere Positionierung ist dabei primär im Bereich der Positionierungsanordnung gegeben, kann sich aber je nach Ausführungsform auch auf die gesamte Motorhaube auswirken.

Eine Ausgestaltung sieht vor, dass die Positionierungsanordnung in der Schließposition eine Position der Motorhaube bezüglich der Querachse festlegt. Die Motorhaube ist somit bezüglich der Querachse arretiert, wenn sie sich in der Schließposition befindet. D.h., das wenigstens eine Positionierungselement und das wenigstens eine Gegenelement bilden einen vollständigen Formschluss bezüglich der Querachse, der keine diesbezüglichen Positionsverschiebungen zulässt. Bei dieser Ausführungsform ist es möglich, allerdings nicht zwingend erforderlich, dass die Positionierungsanordnung einen Bewegungsspielraum hinsichtlich der Längsachse definiert.

Wie bereits oben angedeutet, kann es aufgrund von Fertigungstoleranzen einzelner Teile sowie von Toleranzen bei der Verbindung von Teilen schwierig sein, die Positionen zweier Schwenkelemente und die Positionen zweier zugehöriger Basiselemente exakt aufeinander abzustimmen. Namentlich kann es zu Abweichungen hinsichtlich der Positionen bezüglich der Querachse kommen. Selbst wenn der Abstand der Schwenkelemente exakt auf den Abstand der Basiselemente abgestimmt wäre, könnten beide Schwenkelemente in Querrichtung versetzt sein, wodurch auch die Motorhaube bezüglich der Querachse versetzt angeordnet würde. Dies ist zumindest unter ästhetischen Aspekten, u.U. auch unter funktionellen Aspekten nachteilig, z.B. da die Motorhaube die Motorraum-Zugangsöffnung nicht vollständig verschließen kann. Insbesondere um derartige Toleranzen ausgleichen und Positionierungsfehler vermeiden zu können, ist es bevorzugt, dass wenigstens eine Scharnieranordnung einen Bewegungsspielraum des Schwenkelements gegenüber dem Basiselement bezüglich der Querachse definiert. D.h. das Schwenkelement und das Basiselement sind derart ausgebildet, dass ihre Relativposition bezüglich der Querachse nicht exakt festgelegt ist, sondern das Schwenkelement innerhalb des Bewegungsspielraums beliebig anordenbar oder angeordnet ist. Man kann auch von einem Bewegungsfreiraum oder von einem Spiel sprechen. Der genannte Bewegungsspielraum ist bezogen auf die jeweilige Scharnieranordnung gegeben. Die Motorhaube kann insgesamt trotz des Bewegungsspielraums bezüglich der Querachse gegenüber dem Fahrzeugkörper arretiert sein. Dies kann insbesondere durch die Positionierungsanordnung erreicht werden, sofern diese wie oben beschrieben eine Arretierung bezüglich der Querachse bewirkt. Der durch die Scharnieranordnung definierte Bewegungsspielraum kann bevorzugt wenigstens 1 mm, wenigstens 3 mm, wenigstens 5 mm oder wenigstens 7 mm betragen. Höchstens beträgt der Bewegungsspielraum bevorzugt 10 mm. Dies bezieht sich auf den insgesamt zur Verfügung stehenden Platz, so dass das Schwenkelement bei einem Bewegungsspielraum von 3 mm beispielsweise ausgehend von einer Mittelposition beiderseits um jeweils 1,5 mm versetzbar ist.

Zusätzlich oder alternativ zu einer Arretierung bezüglich der Querachse kann die Positionierungsanordnung in der Schließposition eine Arretierung bezüglich der Längsachse bewirken. Dies kann insbesondere dann vorteilhaft sein, wenn die wenigstens eine Scharnieranordnung keine Arretierung bezüglich der Längsachse bewirkt, z.B. weil sie nur einen einseitigen Formschluss bezüglich der Längsachse herstellt. In diesem Fall muss die Position der Motorhaube bezüglich der Längsachse in anderer Weise definiert werden. Bei dieser Ausführungsform geschieht dies über eine Arretierung durch die Positionierungsanordnung. Diese beruht auf einem spielfreien Formschluss zwischen dem wenigstens einen Positionierungselement und dem wenigstens einen Gegenelement.

Eine Ausgestaltung sieht vor, dass wenigstens ein Positionierungselement in der Schließposition entlang der Hochachse abwärts von der Motorhaube abragt. Das Positionierungselement springt somit entlang der Hochachse abwärts gegenüber der Motorhaube vor. Ein solches Abragen entlang der Hochachse ist sowohl für einen Formschluss bezüglich der Längsachse als auch bezüglich der Querachse vorteilhaft. Ein zugehöriges Gegenelement definiert eine entsprechende Ausnehmung, die entlang der Hochachse abwärts zurückweicht. Man kann dies auch als eine Vertiefung bezeichnen.

Die Positionierungsanordnung ist normalerweise nicht dazu vorgesehen, die Motorhaube vollständig zu arretieren und somit deren Öffnen zu verhindern. Vielmehr weist die Motorhauben-Anordnung bevorzugt einen von der Schwenkachse beabstandeten Verriegelungsmechanismus zum Verriegeln der Motorhaube in der Schließposition auf, mit einem motorhaubenseitigen ersten Verriegelungselement sowie einem fahrzeugkörperseitigen zweiten Verriegelungselement. Der Verriegelungsmechanismus kann auch als Schlossmechanismus bezeichnet werden. Dabei ist bevorzugt eines der Verriegelungselemente als Schließbügel ausgebildet, während das andere Verriegelungselement das eigentliche Schloss bildet. Insbesondere kann das erste Verriegelungselement als Schließbügel ausgebildet sein und das zweite Verriegelungselement als Schloss. Aufgrund ihrer prinzipiell unterschiedlichen Funktion ist der Verriegelungsmechanismus bevorzugt von der Positionierungsanordnung beabstandet. D.h. das erste Verriegelungselement ist bevorzugt von jedem Positionierungselement beabstandet und das zweite Verriegelungselement von jedem Gegenelement. Eine vorteilhafte Ausgestaltung sieht dabei vor, dass das zweite Verriegelungselement bezüglich der Querachse zwischen zwei Gegenelementen angeordnet ist. Entsprechend ist dabei das erste Verriegelungselement bezüglich der Querachse zwischen zwei Positionierungselementen angeordnet. Bevorzugt ist durch den Verriegelungsmechanismus ein Formschluss bezüglich der Hochachse herstellbar, während die Positionierungsanordnung eine wenigstens einseitige Beweglichkeit bezüglich der Hochachse erlaubt. Die Verriegelungselemente können auch ein Formschluss bezüglich der Längsachse und/oder bezüglich der Querachse herstellen. Insbesondere können die Verriegelungselemente durch einen Formschluss eine Arretierung bezüglich der Querachse bewirken. Insofern kann der Verriegelungsmechanismus die Wirkung der Positionierungsanordnung ergänzen, falls diese nur eine Arretierung bezüglich der Längsachse bewirkt.

Eine Ausführungsform sieht vor, dass das Basiselement wenigstens eine Basis-Führungsfläche aufweist, wobei das Schwenkelement wenigstens eine Schwenk-Führungsfläche aufweist, wobei wenigstens eine Führungsfläche kreisbogenförmig und konzentrisch zur Schwenkachse ausgebildet ist und jeweils eine Schwenk-Führungsfläche derart mit einer Basis-Führungsfläche zusammenwirkt, dass sie bei der Schwenkbewegung an dieser geführt ist. Unter Umständen kann man auch davon sprechen, dass durch wenigstens ein Paar von Führungsflächen die Schwenkachse definiert ist. Da eine der Führungsflächen kreisbogenförmig ausgebildet ist und die beiden Führungsflächen aneinander geführt sind, entspricht das Kreiszentrum des Kreisbogens einer Schwenkachse. Der Begriff "kreisbogenförmig" bezieht sich streng genommen auf die Form der Führungsfläche bezüglich einer Schnittebene, die senkrecht zur Schwenkachse verläuft. Insgesamt kann die Führungsfläche z.B. einem Zylindermantel oder einem Teil eines Zylindermantels entsprechen. Die Schwenk-Führungsfläche und die Basis-Führungsfläche bilden eine Führung, wobei sie ganz oder teilweise in gleitendem Kontakt miteinander sein können. Es kann lediglich eine der Führungsflächen kreisbogenförmig ausgebildet sein oder insbesondere auch beide, was im Allgemeinen die Führungseigenschaft verbessert.

Neben der Führungsfunktion können die Führungsflächen auch eine Stützfunktion ausüben. Dabei kann vorteilhaft vorgesehen sein, dass das Schwenkelement in der Öffnungsposition über wenigstens eine Schwenk-Führungsfläche und eine hiermit zusammenwirkende Basis-Führungsfläche am Basiselement abgestützt ist. Hieraus resultiert selbstverständlich eine Abstützung der Motorhaube am Fahrzeugkörper. Somit kann das Gewicht der Motorhaube wenigstens teilweise über die jeweilige Scharnieranordnung am Fahrzeugkörper abgestützt werden. Dies erleichtert dem Benutzer die Handhabung der Motorhaube und ist insbesondere vorteilhaft, wenn die Öffnungsposition nicht als bloße Zwischenposition beim Demontieren der Motorhaube genutzt wird, sondern die Motorhaube für längere Zeit in der Öffnungsposition verbleiben soll. Normalerweise ist die Abstützung des Schwenkelements am Basiselement gleichbedeutend mit einem wenigstens einseitigen Formschluss bezüglich der Hochachse (sofern die Hochachse parallel zur Richtung der Schwerkraft verläuft).

Gemäß einer Ausgestaltung weist das Basiselement einen Nabenabschnitt auf mit einer Basis-Führungsfläche, die mit einer Schwenk-Führungsfläche eines bezüglich der Schwenkachse radial außenseitig angeordneten Bogenabschnitts des Schwenkelements zusammenwirkt, wobei der Nabenabschnitt und der Bogenabschnitt in der Schließposition einen wenigstens einseitigen Formschluss bezüglich der Längsachse sowie bezüglich der Hochachse bilden. Der Nabenabschnitt ist bevorzugt der Abschnitt, der bezüglich der Schwenkachse am weitesten radial innen liegt, ähnlich der Nabe eines Rades. Entsprechend weist er radial außenseitig die genannte Basis-Führungsfläche auf, welche mit der Schwenk-Führungsfläche des Bodenabschnitts zusammenwirkt. Der Bogenabschnitt ist radial außenseitig des Nabenabschnitts angeordnet und kann wenigstens teilweise bogenartig ausgebildet sein. Diese Bogenform kann sich allerdings auf die Schwenk-Führungsfläche beschränken. Bei der Schwenkbewegung ist der Bogenabschnitt radial außenseitig am Nabenabschnitt geführt. In der Schließposition bilden die beiden Abschnitte einen wenigstens einseitigen Formschluss, welcher sowohl bezüglich der Längsachse als auch bezüglich der Hochachse gegeben ist. Kräfte werden dabei über die Basis-Führungsfläche und die Schwenk-Führungsfläche übertragen. Vorteilhaft ist bezüglich der Hochachse ein beidseitiger Formschluss gegeben.

Vorteilhaft definiert der Bogenabschnitt eine sich radial erstreckende Ausnehmung, welche durch die Schwenk-Führungsfläche sowie zwei Verschiebungs-Führungsflächen begrenzt ist, welche bei der Entkopplungsbewegung mit dem Nabenabschnitt zusammenwirken, so dass sie an diesem geführt sind. Man kann sagen, dass bei der Entkopplungsbewegung der Nabenabschnitt entlang der Ausnehmung aus dem Bogenabschnitt herausgeführt wird bzw. bei der umgekehrten Bewegung durch die Ausnehmung in den Bogenabschnitt eingeführt wird. Die Schwenk-Führungsfläche definiert dabei das Ende der Ausnehmung, während die Verschiebungs-Führungsflächen deren Seiten bilden. Der Abstand der Verschiebungs-Führungsflächen kann vorteilhaft auf die Abmessungen des Nabenabschnitts abgestimmt sein, so dass sie eine definiert geführte Bewegung des Schwenkelements ermöglichen. Der Verlauf der Verschiebungs-Führungsflächen definiert dabei die Richtung der Entkopplungsbewegung.

Das Schwenkelement kann wenigstens einen elastisch verformbaren Rastabschnitt aufweisen, der einen der Entkopplungsbewegung entgegenwirkenden Formschluss mit dem Basiselement bildet, welcher durch Verformung des Rastabschnitts aufhebbar ist. Der Formschluss kann insbesondere mit dem o.g. Nabenelement gebildet sein. Durch elastische Verformung des Rastabschnitts ist dieser am Nabenelement vorbeiführbar, wodurch das Schwenkelement entweder ausgehend von der Öffnungsposition vom Basiselement entfernt werden kann oder aber umgekehrt in die Öffnungsposition geführt werden kann. Der Rastabschnitt kann insbesondere im Bereich einer der o.g. Verschiebungs-Führungsflächen ausgebildet sein. Vorteilhaft können auch zwei Rastabschnitte ausgebildet sein, die einander bspw. bezüglich der o.g. radialen Ausnehmung gegenüberliegen können. Der jeweilige Rastabschnitt kann eine vorspringende Rastnase aufweisen. Um eine ausreichende Elastizität des Rastabschnitts zu gewährleisten, kann das Schwenkelement ein elastisches Rastelement aufweisen, das mit einem im wesentlichen starren Verbindungselement verbunden ist, welches seinerseits mit der Motorhaube verbunden ist. Somit kann der Rastabschnitt elastisch ausgebildet sein, während das Schwenkelement ansonsten eine starre, mechanisch stabile Struktur aufweist. Die elastische Verformung kann in einigen Ausführungsformen eine Verformung der Rastnase beinhalten. Um die elastische Verformbarkeit einer Rastnase zu verbessern, kann diese eine Ausnehmung aufweisen.

Bevorzugt weist das Basiselement wenigstens einer Scharnieranordnung zwei entlang der Schwenkachse beabstandete Wangenabschnitte auf, die zwischen sich einen Aufnahmeraum zur wenigstens teilweisen Aufnahme des Schwenkelements definieren, der in eine Einführöffnung für das Schwenkelement übergeht. Die beiden Wangenabschnitte können mit dem Schwenkelement einen beidseitigen Formschluss entlang der Schwenkachse - und somit entlang der Querachse - bilden. Die beiden Wangenabschnitte können insbesondere durch separat gefertigte Elemente, die nachträglich miteinander verbunden wurden, gebildet sein. Die Wangenabschnitte sind beabstandet, wobei der Nabenabschnitt als Abstandhalter dienen kann, also in Richtung der Schwenkachse (also der Querachse) zwischen den Wangenabschnitten zwischengeordnet sein kann. In der Schließposition sowie in der Öffnungsposition ist das Schwenkelement wenigstens teilweise zwischen den Wangenabschnitten im Aufnahmeraum angeordnet. Der Aufnahmeraum kann so dimensioniert sein, dass er den o.g. Bewegungsspielraum für das Schwenkelement definiert. D.h. der Abstand der Wangenelemente entlang der Querachse kann um den genannten Bewegungsspielraum größer sein als eine Breite des Schwenkelements.

Weitere vorteilhafte Einzelheiten und Wirkungen der Erfindung sind im Folgenden anhand von unterschiedlichen, in den Figuren dargestellten Ausführungsbeispielen näher erläutert. Es zeigen
- Fig. 1: eine vereinfachte perspektivische Darstellung eines Kraftfahrzeugs mit einer ersten Ausführungsform einer erfindungsgemäßen Motorhauben-Anordnung mit einer Motorhaube in einer Schließposition;
- Fig. 2: eine vereinfachte perspektivische Darstellung des Kraftfahrzeugs aus Fig.1 mit der Motorhaube in einer Öffnungsposition;
- Fig. 3: eine perspektivische Darstellung von Teilen der Motorhauben-Anordnung aus Fig.1;
- Fig. 4: eine stark schematisierte Vorderansicht der Motorhauben-Anordnung aus Fig. 1;
- Fig. 5: eine Schnittdarstellung gemäß der Linie V-V in Fig.4;
- Fig. 6: eine stark schematisierte Vorderansicht einer weiteren Ausführungsform einer Motorhauben-Anordnung;
- Fig. 7: eine Schnittdarstellung gemäß der Linie VII-VII in Fig.6;
- Fig. 8: eine perspektivische Darstellung einer Scharnieranordnung der Motorhauben-Anordnung aus Fig.1;
- Fig. 9: eine Explosionsdarstellung eines Basiselements der Scharnieranordnung aus Fig.8;
- Fig. 10A: eine Seitenansicht der Scharnieranordnung aus Fig.8 mit einem Teil der Motorhaube in der Schließposition;
- Fig. 10B: eine Seitenansicht der Scharnieranordnung aus Fig.8 mit einem Teil der Motorhaube in der Öffnungsposition; sowie
- Fig. 10C: eine Seitenansicht der Scharnieranordnung aus Fig.8 mit einem Teil der Motorhaube in einer entkoppelten Position.

In den unterschiedlichen Figuren sind gleiche Teile stets mit denselben Bezugszeichen versehen, weswegen diese in der Regel auch nur einmal beschrieben werden.

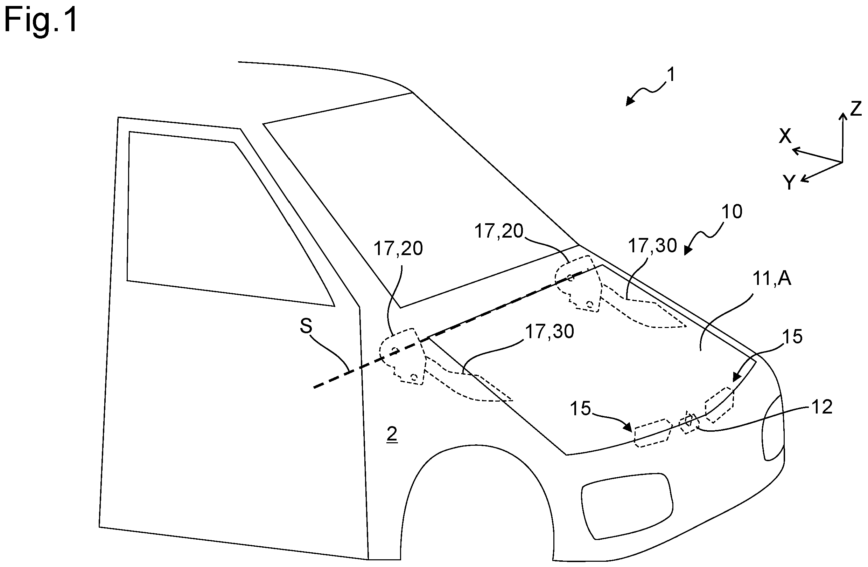

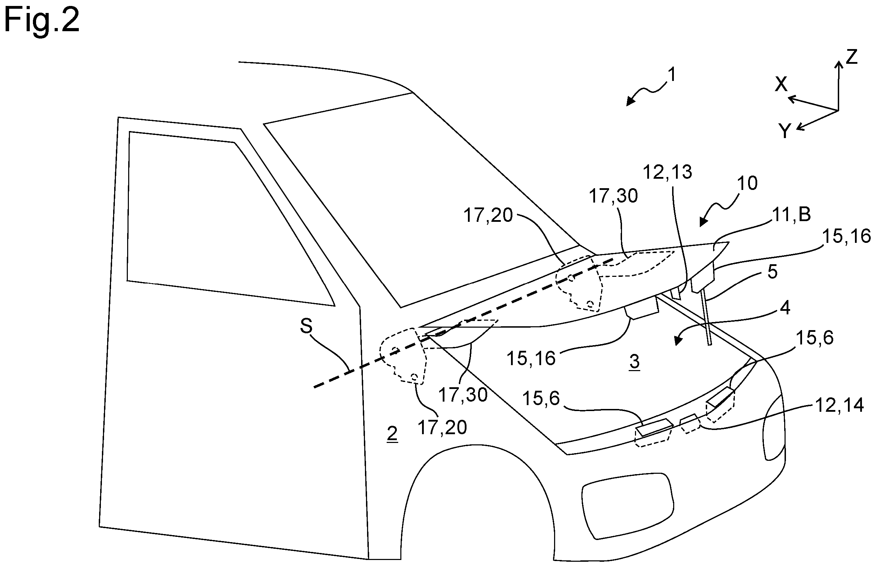

Fig. 1 und 2 zeigen ein Kraftfahrzeug 1, z.B. ein Elektrofahrzeug, mit einem Fahrzeugkörper 2, der bezüglich einer Längsachse X frontseitig einen Motorraum 3 aufweist. Der Motorraum 3 ist über eine Motorraum-Zugangsöffnung 4 zugänglich, die wiederum durch eine Motorhaube 11 verschließbar ist. Fig.1 zeigt die Motorhaube 11 in einer Schließposition A, während Fig.2 eine Öffnungsposition B zeigt, in welcher die Motorhaube 11 aufgestellt ist und somit die Motorraum-Zugangsöffnung 4 freigibt. Die Motorhaube 11 ist Teil einer ersten Ausführungsform einer erfindungsgemäßen Motorhauben-Anordnung 10. Letztere weist zwei Scharnieranordnungen 17 auf, die bezüglich einer Querachse Y zueinander beabstandet an der Motorhaube 11 angeordnet sind und diese mit dem Fahrzeugkörper 2 verbinden. Jede Scharnieranordnung 17 weist ein mit der Motorhaube 11 verbundenes Schwenkelement 30 auf sowie ein hiermit zusammenwirkendes Basiselement 20, das mit dem Fahrzeugkörper 2 verbunden ist. Des Weiteren ist ein Verriegelungsmechanismus 12 vorgesehen, der als erstes Verriegelungselement 13 einen mit der Motorhaube 11 verbundenen Schließbügel und als zweites Verriegelungselement 14 ein zugehöriges Schloss auf Seiten des Fahrzeugkörpers 2 aufweist. Außerdem ist eine Positionierungsanordnung 15 erkennbar, die zwei motorhaubenseitige Positionierungselemente 16 sowie zwei fahrzeugkörperseitige Gegenelemente 6 aufweist. In der Schließposition A wirken die Positionierungselemente 16 formschlüssig mit den Gegenelementen 6 zusammen, wodurch eine Position der Motorhaube 11 in horizontaler Richtung, also senkrecht zur Hochachse Z, festgelegt ist.

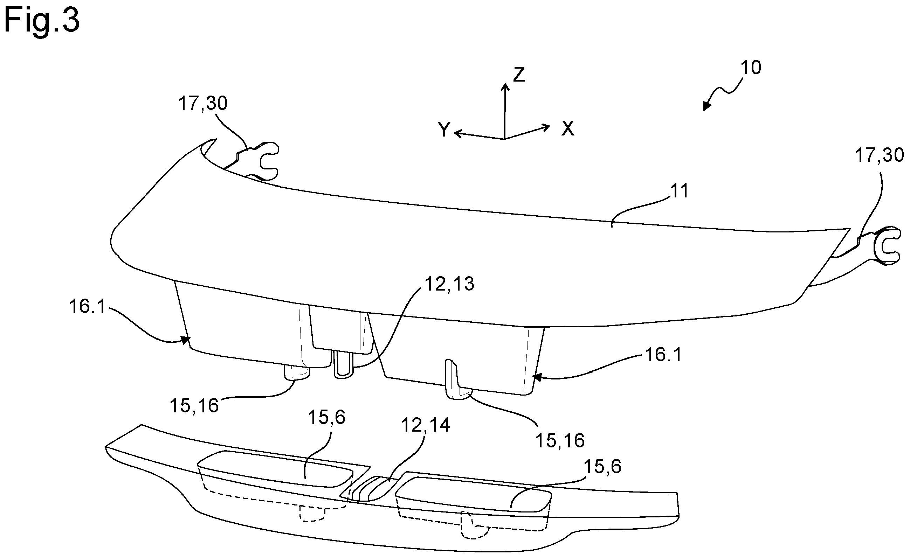

Fig. 3 ist eine perspektivische Darstellung von Teilen der Motorhauben-Anordnung 10 aus Fig.1 und 2. Die Darstellung ist detaillierter und hinsichtlich der Dimensionen präziser als in Fig.1 und 2. Deutlich erkennbar sind die zwei Positionierungselemente 16, die bezüglich der Hochachse Z abwärts von der Motorhaube 11 abragen. Sie sind bezüglich der Querachse Y voneinander beabstandet, wobei das erste Verriegelungselement 13 zwischen ihnen zwischengeordnet ist. Die in Fig.3 dargestellte Relativposition der Motorhaube 11 mit den Positionierungselementen 16 gegenüber den Gegenelementen 6 entspricht weder der Schließposition A noch der Öffnungsposition B, sondern repräsentiert einen entkoppelten Zustand der Motorhaube 11, in welchem die Schwenkelemente 30 von den Basiselementen 20 gelöst sind. Allerdings entspricht die Orientierung bezüglich der Längsachse X, der Querachse Y und der Hochachse Z derjenigen in der Schließposition A. Die beiden hier einstückig miteinander ausgebildeten Gegenelemente 6 bilden Ausnehmungen aus, die so dimensioniert sind, dass sie jeweils eines der Positionierungselemente 16 formschlüssig aufnehmen können. Die Positionierungselemente 16 können abgeschrägte Leitflächen 16.1 aufweisen, die beim Schließen der Motorhaube 11 ein positionssicheres Einführen in die Ausnehmungen der Gegenelemente 6 gewährleisten. Zwischen den Gegenelementen 6 ist das zweite Verriegelungselement 14 angeordnet, so dass es in der Schließposition A mit dem ersten Verriegelungselement 13 eingreifen und die Motorhaube 11 verriegeln kann.

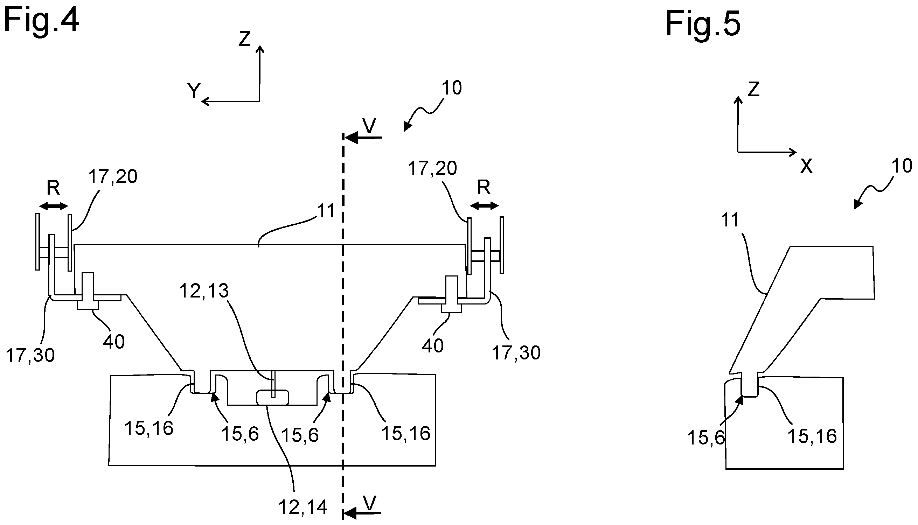

Fig.4 und 5 zeigen in stark schematisierter Form die Motorhauben-Anordnung 10 mit der Motorhaube 11 in der Schließposition A. Die Formen und relativen Dimensionen der einzelnen Bauteile in Fig. 4-7 weichen deutlich von der Realität ab, was vornehmlich zur besseren Veranschaulichung dient. Die beiden Schwenkelemente 30 sind durch Schrauben 40 mit der Motorhaube 11 verbunden. Aufgrund von Fertigungssowie Montagetoleranzen lassen sich die Positionen der Schwenkelemente 30 sowie ihr Abstand entlang der Querachse Y nicht genau festlegen. Um dem Rechnung zu tragen, definiert jedes Basiselement 20 mit dem zugehörigen Schwenkelement 30 einen Bewegungsspielraum R bezüglich der Querachse Y. Innerhalb dieses Bewegungsspielraums R, der bspw. wenigstens 1 mm, wenigstens 3 mm, wenigstens 5 mm oder wenigstens 7 mm und höchstens 10 mm betragen kann, kann das jeweilige Schwenkelement 30 für sich genommen gegenüber dem Basiselement 20 beliebig positioniert werden. Aufgrund der Verbindung des Schwenkelements 30 mit der Motorhaube 11 kann die genannte Beweglichkeit allerdings eingeschränkt sein. Wie nachfolgend noch erläutert wird, sind die Scharnieranordnungen 17 so ausgebildet, dass sie die Position der Motorhaube 11 bezüglich der Längsachse X nicht oder nur unvollständig festlegen. Die Position wird durch einen formschlüssigen Eingriff der Positionierungselemente 16 mit den Gegenelementen 6 erreicht. Diese greifen bezüglich der Längsachse X spielfrei miteinander ein. Daher können auch Kräfte, die entlang der Längsachse X zwischen Motorhaube 11 und Fahrzeugkörper 2 wirken, über die Positionierungsanordnung 15 aufgenommen werden. In diesem Beispiel ist der Eingriff bezüglich der Querachse Y nicht spielfrei, so dass eine Relativbewegung möglich ist. Diese kann allerdings im Vergleich zu dem o.g. Bewegungsspielraum R bereits eingeschränkt sein. Der Bewegungsspielraum R sorgt in jedem Fall dafür, dass die Position der Motorhaube 11 entlang der Querachse Y angepasst werden kann, ohne dass es zu Verspannungen im Bereich der Scharnieranordnungen 17 oder zu Verformungen der Motorhaube 11 kommt. Die Position bezüglich der Querachse Y kann auch durch einen Formschluss der Verriegelungselemente 13, 14 festgelegt sein.

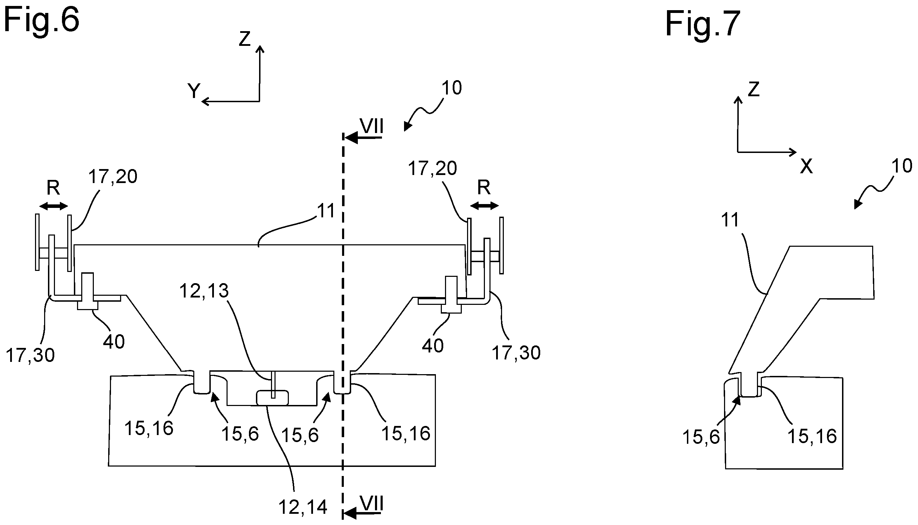

Fig. 6 und 7 zeigen in ähnlicher Weise wie Fig. 4 und 5 eine weitere Ausführungsform einer Motorhaube-Anordnung 10, die weitgehend mit der ersten Ausführungsform identisch ist und insofern nicht nochmals erläutert wird. Allerdings ist in diesem Fall vorgesehen, dass die Gegenelemente 6 mit den Positionierungselementen 16 einen spielfreien Formschluss bezüglich der Querachse Y bilden und diesbezüglich die Position der Motorhaube 11 festlegen. Dafür ist ein gewisses Spiel zwischen den Gegenelemente 6 und dem Positionierungselemente 16 in Richtung der Längsachse X gegeben. D.h. in diesem Fall können entlang der Querachse Y wirkende Kräfte über die Positionierungsanordnung 15 übertragen werden, während bezüglich der Längsachse X eine gewisse Beweglichkeit der Motorhaube 11 gegenüber dem Fahrzeugkörper 2 gegeben ist.

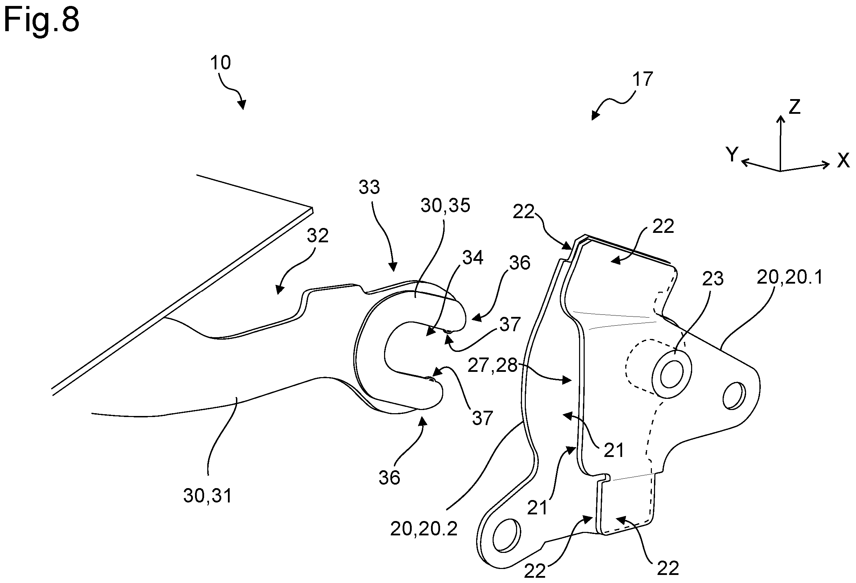

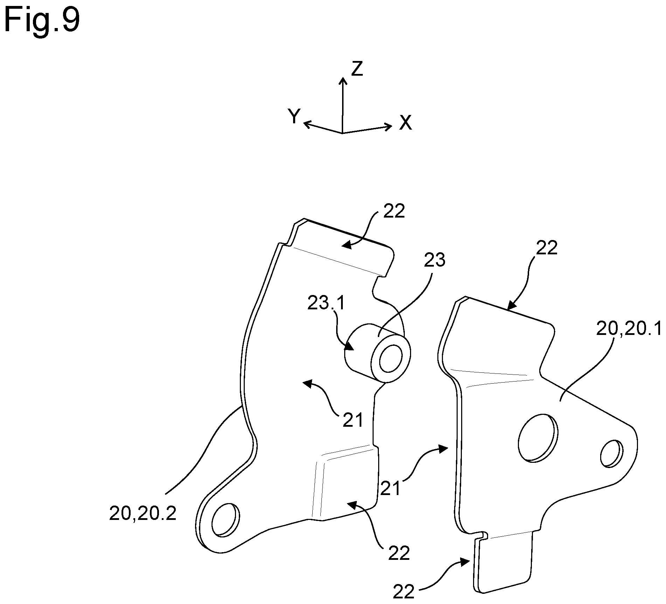

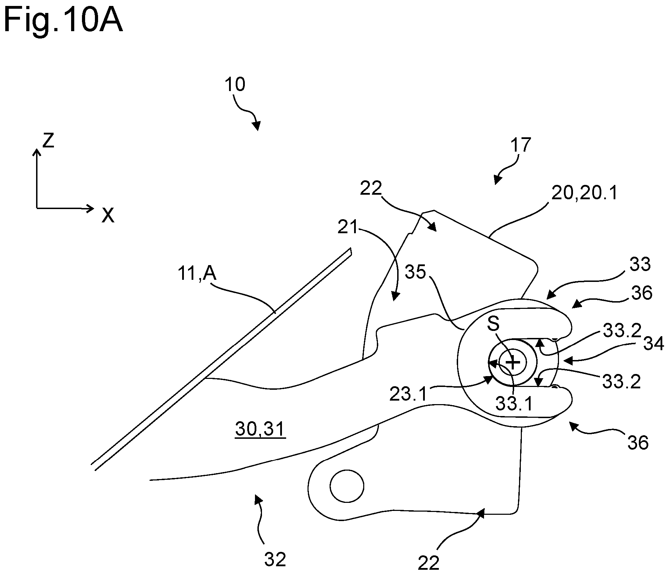

Fig. 8 ist eine perspektivische Darstellung einer Scharnieranordnung 15, während Fig. 9 eine Explosionsdarstellung des zugehörigen Basiselements 20 ist. Dieses Basiselement 20 besteht in diesem Beispiel aus zwei jeweils einstückig ausgebildeten Elementteilen 20.1, 20.2. Ein erstes Elementteil 20.1 weist einen ersten Wangenabschnitt 21 auf, der parallel zur Längsachse X sowie zu einer Hochachse Z verläuft. Von dem Wangenabschnitt 21 ragt in Richtung der Querachse Y ein Nabenabschnitt 23 ab. Am Nabenabschnitt 23 ist eine Basis-Führungsfläche 23.1 ausgebildet, die zylindrisch (also in der Seitenansicht von Fig.10A-10C kreisbogenförmig) ausgebildet und konzentrisch bezüglich einer Schwenkachse S angeordnet ist. Das zweite Elementteil 20.2 ist in diesem Fall überwiegend weist einen zweiten Wangenabschnitt 21 auf. Außerdem weisen beide Elementteile 20.1, 20.2 Verbindungsabschnitte 22 auf, die z.B. miteinander verschweißt werden können. Wenn die beiden Elementteile 20.1, 20.2 zusammengesetzt sind, sind beide Wangenabschnitte 21 entlang der Querachse Y zueinander beabstandet und definieren zwischen sich einen Aufnahmeraum 27 für einen Teil des Schwenkelements 30. Dabei verbleibt eine Einführöffnung 28, durch welche das Schwenkelement 30 eingeführt werden kann. Der Aufnahmeraum 27 ist so bemessen, dass der o.g.

Bewegungsspielraum R gegeben ist. Das Schwenkelement 30, welches mit der Motorhaube 11 verbunden ist, weist ein Verbindungsteil 31 auf sowie ein hiermit z.B. durch Verkleben verbundenes Rastteil 35. Das Verbindungsteil 31 ist im Wesentlichen starr ausgebildet und kann z.B. aus Stahl bestehen. Es bildet einen Armabschnitt 32, der sich zur Motorhaube 4 hin erstreckt. Außerdem bildet es zusammen mit dem Rastteil 35 einen Bogenabschnitt 33. Das Rastteil 35 kann aus einem vergleichsweise elastischen Material wie Federstahl oder faserverstärktem Kunststoff gefertigt sein. Es weist zwei Rastabschnitte 36 auf, die einander bezüglich einer Ausnehmung 34 gegenüberliegen. Jeder Rastabschnitt 36 weist eine Rastnase 37 auf, die in Richtung der Ausnehmung 34 vorspringt. Jede Rastnase 37 weist eine Ausnehmung (ohne Bezugszeichen) auf, wodurch sie leichter verformbar ist. Die Breite der Ausnehmung 34 ist geringfügig größer als der Durchmesser des Nabenabschnitts 23.

Fig. 10A zeigt eine Seitenansicht einer Scharnieranordnung 17 mit einem Teil der Motorhaube 11 in der Schließposition A, wobei das zweite Elementteil 20.2 weggelassen wurde. Endseitig des Armabschnitts 32 ist der o.g. Bogenabschnitt 33 ausgebildet. Er weist eine Schwenk-Führungsfläche 33.1 auf, die wiederum konzentrisch zur Schwenkachse S angeordnet ist. Ihre Größe ist auf die Basis-Führungsfläche 23.1 abgestimmt. An die Schwenk-Führungsfläche 33.1 schließen sich zwei Verschiebungs-Führungsflächen 33.2 an, die parallel zueinander verlaufen und in der in Fig. 10A gezeigten Schließposition A parallel zur Längsachse X ausgerichtet sind. Sie begrenzen zusammen mit der Schwenk-Führungsfläche 33.1 die o.g. Ausnehmung 34 innerhalb des Bogenabschnitts 33. In der Schließposition A, in welcher das Schwenkelement 30 teilweise im Aufnahmeraum 27 angeordnet ist, ist zwischen dem Schwenkelement 30 und dem Basiselement 20 ein beidseitiger Formschluss bezüglich der Hochachse Z hergestellt. Dieser beruht auf dem Zusammenwirken des Bogenabschnitts 33 mit dem Nabenabschnitt 23. Es ist somit keine translatorische Bewegung des Schwenkelements 30 gegenüber dem Basiselement 20 entlang der Hochachse Z möglich. Außerdem ist ein einseitiger Formschluss bezüglich der Längsachse X gegeben, welcher auf dem Zusammenwirken des Bogenabschnitts 33 mit dem Nabenabschnitt 23 beruht. Eine Bewegung entlang der Querachse Y wird durch die einander gegenüberliegenden Wangenabschnitte 21 zwar eingeschränkt, aber im Rahmen des Bewegungsspielraums R nicht verhindert.

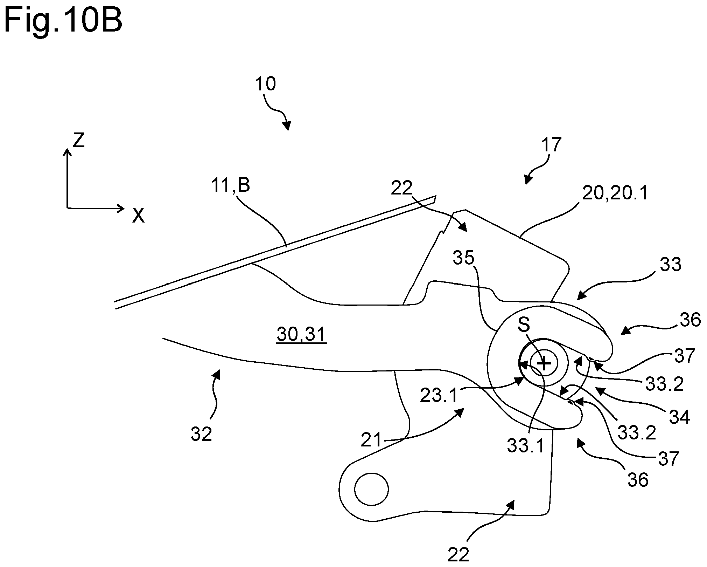

Um den Motorraum 3 freizugeben, wird der Verriegelungsmechanismus 12 gelöst und anschließend die Motorhaube 11 mit dem jeweiligen Schwenkelement 30 um die Schwenkachse S geschwenkt. Dabei wird auch der Formschluss zwischen den Positionierungselementen 16 und den Gegenelementen 6 aufgelöst. Bei der entsprechenden Schwenkbewegung bildet die Basis-Führungsfläche 23.1 mit der Schwenk-Führungsfläche 33.1 ein Flächenpaar, das aneinander geführt ist. Durch die entsprechende Führung erfolgt die Schwenkbewegung sicher und in definierter Weise. Fig. 10B zeigt die am Ende der Schwenkbewegung erreichte Öffnungsposition B. In dieser ist nach wie vor ein teilweiser Formschluss zwischen dem Schwenkelement 30 und dem Basiselement 20 gegeben. Allerdings kann, wie in Fig. 2 angedeutet, die Motorhaube 11 in der Öffnungsposition B mittels einer Motorhaubenstütze 5 abgestützt werden. Dabei ist die Motorhaube 11 über das Schwenkelement 30 und das Basiselement 20 weiterhin teilweise gegenüber dem Fahrzeugkörper 2 abgestützt. Kräfte entlang der Hochachse Z sowie entlang der Längsachse X werden zum einen über die Schwenk-Führungsfläche 33.1 und die Basis-Führungsfläche 23.1 übertragen.

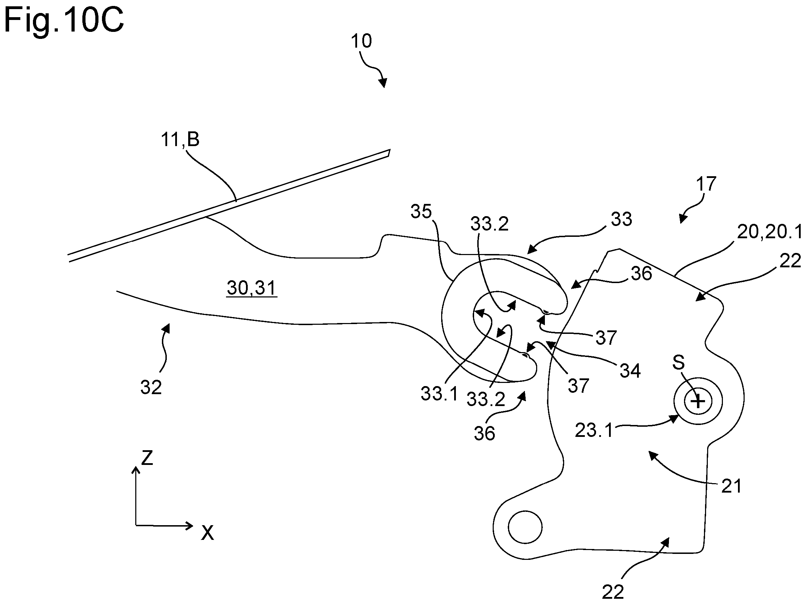

Ausgehend von der Öffnungsposition B kann die Motorhaube 11 allerdings auch vollständig entfernt werden. Dies ist entsprechend einer Entkopplungsbewegung möglich, die durch den Verlauf der Verschiebungs-Führungsflächen 33.2 definiert ist. Die entsprechende Entkopplungsbewegung verläuft translatorisch, in diesem Fall schräg zur Längsachse X. Die Entkopplung-Führungsflächen 33.2 werden dabei entlang der Basis-Führungsfläche 23.1 des Nabenabschnitts 23 geführt. Um die Rastnasen 37 am Nabenabschnitt 23 vorbeiführen zu können, ist eine elastische Verformung derselben, sowie ggf. der Rastabschnitte 36 insgesamt, nötig. Daher ist zum vollständigen Entfernen der Motorhaube 11 ein zwischenzeitlich erhöhter Kraftaufwand notwendig. Hierdurch erhält der Benutzer einen haptischen Hinweis darauf, ob und wann das Entkoppeln erfolgt. Schließlich wird die in Fig. 10C gezeigte entkoppelte Position erreicht, bei der das Schwenkelement 30 vollständig vom Basiselement 20 gelöst ist. Das Ankoppeln der Motorhaube 11 erfolgt durch einen umgekehrten Bewegungsablauf. Auch hierbei ist eine Verformung der Rastabschnitte 36 nötig, die wiederum mit einem für den Benutzer spürbaren Kraftanstieg verbunden ist.

### Bezugszeichenliste

- 1: Kraftfahrzeug
- 2: Fahrzeugkörper
- 3: Motorraum
- 4: Motorraum-Zugangsöffnung
- 5: Motorhaubenstütze
- 6: Gegenelement
- 10: Motorhauben-Anordnung
- 11: Motorhaube
- 12: Verriegelungsmechanismus
- 13, 14: Verriegelungselement
- 15: Positionierungsanordnung
- 16: Positionierungselement
- 16.1: Leitfläche
- 17: Scharnieranordnung
- 20: Basiselement
- 20.1, 20.2: Elementteil
- 21: Wangenabschnitt
- 22: Verbindungsabschnitt
- 23: Nabenabschnitt
- 23.1: Basis-Führungsfläche
- 27: Aufnahmeraum
- 28: Einführöffnung
- 30: Schwenkelement
- 31: Verbindungsteil
- 32: Armabschnitt
- 33: Bogenabschnitt
- 33.1: Schwenk-Führungsfläche
- 33.2: Verschiebungs-Führungsfläche
- 34: Ausnehmung
- 35: Rastteil
- 36: Rastabschnitt
- 37: Rastnase
- 40: Schraube
- A: Schließposition
- B: Öffnungsposition
- R: Bewegungsspielraum
- S: Schwenkachse
- X: Längsachse
- Y: Querachse
- Z: Hochachse

## Patentansprüche

1. Motorhauben-Anordnung (10) für ein Kraftfahrzeug (1), mit einer Motorhaube (11), welche in einer Schließposition (A) eine Motorraum-Zugangsöffnung (4) eines Fahrzeugkörpers (2) verschließt, sowie mit wenigstens einer Scharnieranordnung (17), die ein fahrzeugkörperseitiges Basiselement (20) und ein motorhaubenseitiges Schwenkelement (30) aufweist, welche in der Schließposition (A) einen beidseitigen Formschluss bezüglich einer Hochachse (Z) herstellen, wobei die Motorhaube (11) durch eine Schwenkbewegung um eine parallel zu einer Querachse (Y) verlaufende Schwenkachse (S) aus der Schließposition (A) in eine Öffnungsposition (B) schwenkbar ist und aus der Öffnungsposition (B) durch eine wenigstens anteilig translatorische Entkopplungsbewegung zusammen mit dem Schwenkelement (30) vom Fahrzeugkörper (2) lösbar ist,
**gekennzeichnet durch**
eine von der Schwenkachse (S) beabstandete Positionierungsanordnung (15), mit wenigstens einem motorhaubenseitigen Positionierungselement (16) und einem fahrzeugkörperseitigen Gegenelement (6), welche in der Schließposition (A) einen Formschluss bilden, wodurch die Positionierungsanordnung (15) eine Position der Motorhaube (11) bezüglich wenigstens einer horizontalen Achse (X, Y) festlegt, die senkrecht zur Hochachse (Z) verläuft.

2. Motorhauben-Anordnung nach Anspruch 1,
**dadurch gekennzeichnet, dass**
die Positionierungsanordnung (15) in der Schließposition (A) eine Position der Motorhaube (11) bezüglich der Querachse (Y) festlegt.

3. Motorhauben-Anordnung nach einem der vorherigen Ansprüche,
**dadurch gekennzeichnet, dass**
wenigstens eine Scharnieranordnung (17) einen Bewegungsspielraum (R) des Schwenkelements (30) gegenüber dem Basiselement (20) bezüglich der Querachse (Y) definiert, welcher bevorzugt wenigstens 3 mm beträgt.

4. Motorhauben-Anordnung nach einem der vorherigen Ansprüche,
**dadurch gekennzeichnet, dass**
die Positionierungsanordnung (15) in der Schließposition (A) eine Position der Motorhaube (11) bezüglich der Längsachse (X) festlegt.

5. Motorhauben-Anordnung nach einem der vorherigen Ansprüche,
**dadurch gekennzeichnet, dass**
wenigstens ein Positionierungselement (16) in der Schließposition (A) entlang der Hochachse (Z) abwärts von der Motorhaube (11) abragt.

6. Motorhauben-Anordnung nach einem der vorherigen Ansprüche,
**dadurch gekennzeichnet, dass**
diese einen von der Schwenkachse (S) beabstandeten Verriegelungsmechanismus (12) zum Verriegeln der Motorhaube (11) in der Schließposition (A) aufweist, mit einem motorhaubenseitigen ersten Verriegelungselement (13) sowie einem fahrzeugkörperseitigen zweiten Verriegelungselement (14), welches bevorzugt bezüglich der Querachse (Y) zwischen zwei Gegenelementen (6) angeordnet ist.

7. Motorhauben-Anordnung nach einem der vorherigen Ansprüche,
**dadurch gekennzeichnet, dass**
das Basiselement (20) wenigstens eine Basis-Führungsfläche (23.1) aufweist und das Schwenkelement (30) wenigstens eine Schwenk-Führungsfläche (33.1) aufweist, wobei wenigstens eine Führungsfläche (23.1, 33.1) kreisbogenförmig und konzentrisch zur Schwenkachse (S) ausgebildet ist und jeweils eine Schwenk-Führungsfläche (33.1) derart mit einer Basis-Führungsfläche (23.1) zusammenwirkt, dass sie bei der Schwenkbewegung an dieser geführt ist.

8. Motorhauben-Anordnung nach einem der vorherigen Ansprüche,
**dadurch gekennzeichnet, dass**
das Basiselement (20) einen Nabenabschnitt (23) aufweist mit einer Basis-Führungsfläche (23.1), die mit einer Schwenk-Führungsfläche (33.1) eines bezüglich der Schwenkachse (S) radial außenseitig angeordneten Bogenabschnitts (33) des Schwenkelements (30) zusammenwirkt, wobei der Nabenabschnitt (23) und der Bogenabschnitt (33) in der Schließposition (A) einen wenigstens einseitigen Formschluss bezüglich der Längsachse (X) sowie bezüglich der Hochachse (Z) bilden.

9. Motorhauben-Anordnung nach einem der vorherigen Ansprüche,
**dadurch gekennzeichnet, dass**
das Schwenkelement (30) wenigstens einen elastisch verformbaren Rastabschnitt (36) aufweist, der einen der Entkopplungsbewegung entgegenwirkenden Formschluss mit dem Basiselement (20) bildet, welcher durch Verformung des Rastabschnitts (36) aufhebbar ist.

10. Motorhauben-Anordnung nach einem der vorherigen Ansprüche, **dadurch gekennzeichnet, dass**
das Basiselement (20) zwei entlang der Schwenkachse (S) beabstandete Wangenabschnitte (21) aufweist, die zwischen sich einen Aufnahmeraum (27) zur wenigstens teilweisen Aufnahme des Schwenkelements (30) definieren, der in eine Einführöffnung (28) für das Schwenkelement (30) übergeht.
